(19) Europäisches Patentamt
European Patent Office
Office européen des brevets

(11) **EP 2 466 531 A1**

(12) **EUROPÄISCHE PATENTANMELDUNG**

(43) Veröffentlichungstag:
20.06.2012 Patentblatt 2012/25

(51) Int Cl.:
***G06N 3/00*** *(2006.01)*

(21) Anmeldenummer: **10195437.8**

(22) Anmeldetag: **16.12.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **SIEMENS AKTIENGESELLSCHAFT**
**80333 München (DE)**

(72) Erfinder: **Hartmann, Dirk Dr.**
**83550, Emmering (DE)**

(54) **Verfahren zum Erstellen von Navigationsfeldern und Verfahren und Vorrichtung zur dynamischen Wegeplanung**

(57) Die Erfindung betrifft ein Verfahren zum Erstellen von Navigationsfeldern für eine dynamische Wegeplanung eines Individuums, mit den Schritten: Bereitstellen einer Startposition und einer Zielposition eines Individuums in einem Gebiet; Berechnen eines Distanzfeldes des Individuums für das Gebiet, wobei das Distanzfeld für jeden Punkt des Gebiets die kürzeste Distanz zwischen der Startposition und dem Punkt angibt; und Berechnen eines Navigationsfeldes für eine Gruppe von Punkten des Gebiets, wobei das Navigationsfeld die kleinste Reisezeit von jedem Punkt der Gruppe von Punkten zu der Zielposition angibt, und wobei die Gruppe von Punkten aus allen Punkten des Gebiets in Abhängigkeit von Werten des Distanzfelds ausgewählt wird.

FIG 10

**EP 2 466 531 A1**

**Beschreibung**

Die vorliegende Erfindung bezieht sich auf ein Verfahren zum Erstellen von Navigationsfeldern und auf ein Verfahren und eine Vorrichtung zur dynamischen Wegeplanung, insbesondere mithilfe von Navigationsfeldern und Distanzfeldern in einem Automaten zur Personenstromsimulation.

Stand der Technik

Simulationen von Personenströmen sind bei der Modellierung verkehrsphysikalischer Prozesse von großer Bedeutung. Bei der Beschreibung von Verkehrsprozessen, beispielsweise der kollektiven Bewegung Fußgängern entlang vorgegebener Routen, zum Beispiel in Gebäuden, entlang von Straßenzügen oder Fußwegen, oder auf vordefinierten Wegen bei Großveranstaltungen, auf Bahnhöfen oder dergleichen, ist es von großer Bedeutung, die Systemumgebung möglichst wirklichkeitsgetreu wiedergeben zu können, um die darin ablaufenden Bewegungsprozesse zur Simulation realitätsnaher Abläufe an die entsprechenden Rand- und Zwangsbedingungen besser anpassen zu können. Gleichzeitig ist es wichtig, robuste Simulationen zu gewährleisten, um eine Reproduzierbarkeit von Navigationsstrategien, beispielsweise in einer Personenevakuierungssituation, auch bei geringfügigen Änderungen der Systemparameter sicherzustellen.

Ströme von Individuen unterliegen dynamischen Wechselwirkungen, die beispielsweise zu Stauungen oder temporären Ansammlungen von Individuen führen können. Insbesondere auf topologisch komplexen Gebieten mit einer Vielzahl von Hindernissen können solche Stauungen auftreten. Um die Wege von Individuen effektiv planen zu können, ist es nötig, die Navigationsstrategie während der Bewegung des Individuums, auch in Abhängigkeit von der Bewegung und der jeweiligen Wegeplanung der übrigen Individuen des Individuenstroms, anpassen zu können. Auf diese Weise können realistische. Modelle individuellen Verhaltens simuliert werden.

Idealerweise können bei derartigen Simulationen zur Wegeplanung von Individuen die Individuen selbst mit ihrer jeweils eigenen Navigationsstrategie berücksichtigt werden. Dies führt jedoch bei einer hohen Zahl an Individuen zu einem hohen Rechenaufwand für Simulationen. Es ist daher wünschenswert, den notwendigen Rechenaufwand für einzelne Individuen möglichst gering zu halten, ohne dabei zu starke Einschränkungen in der Komplexität des Wegeplanungs- bzw. Navigationsmodells machen zu müssen.

Zur Modellierung von Personenströmen werden häufig sogenannte Zellularautomaten eingesetzt, das heißt, Rechenmodelle auf der Basis eines Gitternetzes mit Gitterzellen, in dem Personen platziert werden und mithilfe dessen über Zustandsübergangsregeln dynamisch und zeitlich veränderlich den Gitterzellen verschiedene Zustände zugewiesen werden können. Mit Ablauf der Simulation ergeben sich für den Zellularautomaten zeitabhängige Konfigurationszustände, die jeweils von einem oder mehreren der vorherigen Konfigurationszustände gemäß der Zustandsübergangsregeln abhängen.

Die allgemeine Aussagekraft der Bewertung von Personenstromsimulationen, insbesondere von Evakuierungsstrategien ist durch die Komplexität des eingesetzten Zellularautomaten limitiert. Insbesondere mikroskopische Simulationsstrategien zur Wegeplanung von Individuen können häufig nicht, den Effekt von temporären Ansammlungen von Personen während der Simulation in ausreichendem Maße berücksichtigen.

Es besteht daher ein Bedarf an Verfahren zur Simulation von Strömen von Individuen, insbesondere von Personenströmen, die auf dynamische Veränderungen der Positionen der Personen bei der Wegeplanung jedes einzelnen Individuums Rücksicht nehmen können, und gleichzeitig schnell, effizient und rechenaufwandsarm arbeiten können.

Offenbarung der Erfindung

Eine grundlegende Idee der Erfindung besteht darin, ein einfaches Verfahren zur Wegeplanung von Individuen in Strömen von Individuen auf einem Gebiet anzugeben, so dass mithilfe eines Zellularautomaten auch komplexe Topologien des Gebiets in eine realistische Personenstromsimulation eingebettet werden können. Dazu wird ein graphenbasierter Navigationsansatz mit einem Ansatz zur erweiterten Navigationsfeldberechnung kombiniert, um schnell und effizient Navigationsfelder dynamisch mit einer veränderten Personenstromsituation während der Simulation aktualisieren zu können.

Die vorliegende Erfindung schafft daher ein Verfahren nach Anspruch 1 zum Erstellen von Navigationsfeldern für eine dynamische Wegeplanung eines Individuums, mit den Schritten des Bereitstellens einer Startposition und einer Zielposition eines Individuums in einem Gebiet, des Berechnens eines Distanzfeldes des Individuums für das Gebiet, wobei das Distanzfeld für jeden Punkt des Gebiets die kürzeste Distanz zwischen der Startposition und dem Punkt angibt, und des Berechnens eines Navigationsfeldes für eine Gruppe von Punkten des Gebiets, wobei das Navigationsfeld die kleinste Reisezeit von jedem Punkt der Gruppe von Punkten zu der Zielposition angibt, und wobei die Gruppe von Punkten aus allen Punkten des Gebiets in Abhängigkeit von Werten des Distanzfelds ausgewählt wird.

Gemäß einer Ausführungsform umfasst das Gebiet eine Vielzahl von Hindernissen, und die kürzesten Distanzen des Distanzfeldes werden unter Berücksichtigung der Vielzahl von Hindernissen bestimmt.

Gemäß einer Ausführungsform umfasst das Gebiet ein zweidimensionales Gebiet, und die kürzesten Distanzen werden in einer euklidischen Metrik bestimmt.

Gemäß einer Ausführungsform umfasst das Gebiet ein Gitternetz mit Gitterzellen, und das Berechnen des Navigationsfeld erfolgt mithilfe eines Fast-Marching-Algorithmus. Dabei kann es vorzugsweise vorgesehen sein, die Sortierung des Fast-Marching-Algorithmus für die Gruppe von Punkten gemäß einer Gewichtung der kleinsten Reisezeit und des Wertes des Distanzfeldes für jeden der Punkte durchzuführen.

Die Erfindung schafft weiterhin ein Verfahren nach Anspruch 6 zur Wegeplanung von Individuen in einem Automaten zur Personenstromsimulation, mit den Schritten des Bereitstellens einer Vielzahl von Startpositionen und einer Vielzahl von Zielpositionen einer Vielzahl von Individuen in einem Gebiet, des Berechnens eines Distanzfeldes für jedes der Vielzahl von Individuen für das Gebiet, wobei das Distanzfeld jeweils für jeden Punkt des Gebiets die kürzeste Distanz zwischen der Startposition des jeweiligen Individuums und dem Punkt angibt, des Berechnens eines Navigationsfeldes für jedes der Vielzahl von Individuen für jeweils eine Gruppe von Punkten des Gebiets, wobei das Navigationsfeld jeweils die kleinste Reisezeit von jedem Punkt der jeweiligen Gruppe von Punkten zu der jeweiligen Zielposition des Individuums angibt, und wobei die jeweilige Gruppe von Punkten aus allen Punkten des Gebiets in Abhängigkeit von Werten des jeweiligen Distanzfelds für das Individuum ausgewählt wird, des Änderns der Position jedes der Vielzahl von Individuen gemäß des ermittelten Navigationsfelds, und des Berechnens eines aktualisierten Navigationsfeldes für jedes der Vielzahl von Individuen für jeweils eine Gruppe von Punkten des Gebiets, wobei die geänderten Positionen der Vielzahl von Individuen bei der Angabe der kleinsten Reisezeiten des Navigationsfeldes berücksichtigt werden.

Gemäß einer Ausführungsform umfasst das Verfahren weiterhin den Schritt des Berechnens eines erweiterten Navigationsfelds für ein Individuum, falls bei dem Schritt des Änderns der Position des Individuums ein Punkt des Gebiets erreicht wird, der nicht in der jeweiligen Gruppe von Punkten des jeweiligen Navigationsfelds liegt. Dabei kann vorzugsweise vorgesehen sein, das Berechnen des erweiterten Navigationsfelds über ein Berechnen eines extrapolierten Wertes für die kleinste Reisezeit aus Werten des Navigationsfelds benachbarter Punkte aus der jeweiligen Gruppe von Punkten durchzuführen.

Die Erfindung schafft ferner eine Vorrichtung nach Anspruch 13 zur Wegeplanung von Individuen in einem Automaten zur Personenstromsimulation, mit einer Bereitstellungseinrichtung, welche dazu ausgelegt ist, eine Vielzahl von Startpositionen und eine Vielzahl von Zielpositionen einer Vielzahl von Individuen in einem Gebiet bereitzustellen, einer Berechnungseinrichtung, welche dazu ausgelegt ist, ein Distanzfeld für jedes der Vielzahl von Individuen für das Gebiet zu berechnen, wobei das Distanzfeld jeweils für jeden Punkt des Gebiets die kürzeste Distanz zwischen der Startposition des jeweiligen Individuums und dem Punkt angibt, und welche dazu ausgelegt ist, ein Navigationsfeld für jedes der Vielzahl von Individuen für jeweils eine Gruppe von Punkten des Gebiets zu berechnen, wobei das Navigationsfeld jeweils die kleinste Reisezeit von jedem Punkt der jeweiligen Gruppe von Punkten zu der jeweiligen des Individuums angibt, und wobei die jeweilige Gruppe von Punkten aus allen Punkten des Gebiets in Abhängigkeit von Werten des jeweiligen Distanzfelds für das Individuum ausgewählt wird, und einer Simulationseinrichtung, welche dazu ausgelegt ist, die Position jedes der Vielzahl von Individuen gemäß des ermittelten Navigationsfelds zu ändern, wobei die Berechnungseinrichtung weiterhin dazu ausgelegt ist, das Navigationsfeld für jedes der Vielzahl von Individuen für jeweils eine Gruppe von Punkten des Gebiets zu aktualisieren, wobei die geänderten Positionen der Vielzahl von Individuen bei der Angabe der kleinsten Reisezeiten des Navigationsfeldes berücksichtigt werden.

Weitere Modifikationen und Variationen ergeben sich aus den Merkmalen der abhängigen Ansprüche.

Kurze Beschreibung der Zeichnungen

Verschiedene Ausführungsformen und Ausgestaltungen der vorliegenden Erfindung werden nun in Bezug auf die beiliegenden Zeichnungen genauer beschrieben. Es zeigen dabei:

Fig. 1    eine schematische Darstellung eines Gebiets mit einem Hindernis zur Wegeplanung für Individuen;

Fig. 2    eine schematische Darstellung eines Distanzfeldes auf dem Gebiet aus Fig. 1 gemäß einer Ausführungsform der Erfindung;

Fig. 3    eine schematische Darstellung eines Navigationsfeldes auf dem Gebiet aus Fig. 1 gemäß einer weiteren Ausführungsform der Erfindung;

Fig. 4    eine schematische Darstellung eines gerichteten Navigationsfeldes auf dem Gebiet aus Fig. 1 gemäß einer weiteren Ausführungsform der Erfindung;

Fig. 5    eine schematische Darstellung eines gerichteten Navigationsfeldes auf dem Gebiet aus Fig. 1 gemäß einer weiteren Ausführungsform der Erfindung;

Fig. 6    eine schematische Darstellung eines Verfahrens zur Wegeplanung eines Individuums gemäß einer weiteren Ausführungsform der Erfindung;

Fig. 7    eine schematische Darstellung eines Verfahrens zum Erstellen eines Navigationsfeldes gemäß einer weiteren Ausführungsform der Erfindung;

Fig. 8    eine schematische Darstellung eines Verfahrens zur Wegeplanung von Individuen in einem Automaten zur Personenstromsimulation gemäß einer weiteren Ausführungsform der Erfindung;

Fig. 9    eine schematische Darstellung einer Vorrichtung zur Wegeplanung von Individuen in einem Automaten zur Personenstromsimulation gemäß einer weiteren Ausführungsform der Erfindung;

Fig. 10    eine schematische Darstellung eines Gebiets mit einer Vielzahl von Hindernissen und einem Sichtbarkeitsgraphen; und

Fig. 11    eine schematische Darstellung eines Gebiets mit einer Vielzahl von Hindernissen und einem Navigationsgraphen gemäß einer weiteren Ausführungsform der Erfindung.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Gleiche Bezugszeichen bezeichnen dabei gleiche oder ähnlich wirkende Komponenten.

Ausführliche Beschreibung der Erfindung

Die Notation eines Graphen bzw. eines Navigationsgraphen, wie sie im Sinne der Erfindung verwendet wird, bezieht sich auf geometrische Konstrukte, die mögliche Wege bzw. Routen durch oder auf einem Gebiet definieren. Dabei erfüllen Navigationsgraphen im Sinne der Erfindung die Voraussetzung, dass je zwei unterschiedliche Wege mit gleichen Start- und Endpunkten auf dem Gebiet durch mindestens ein Hindernis getrennt werden, das heißt, Navigationsgraphen sind minimale Graphen.

Navigationsgraphen im Sinne der Erfindung bilden reale Wegesysteme ab, beispielsweise Evakuierungswege für Personen in einem Gebäude, auf einem Veranstaltungsgelände oder in ähnlichen Gebieten. Die Kanten der Navigationsgraphen sind dabei Wegekanten, das heißt, sie bilden eine eindimensionale Darstellung eines möglichen Weges zwischen zwei Knotenpunkten des Navigationsgraphen. Knotenpunkte des Navigationsgraphen können dabei Weggabelungen, Kreuzungen oder ähnliche Wegpunkte darstellen, an denen Personen zur Wegfindung zwei oder mehr Möglichkeiten zur Bewegung entlang der von dem betreffenden Wegpunkt ausgehenden Wegekanten haben.

Individuen im Sinne der Erfindung können Personen, Fahrzeuge oder ähnliche selbstdeterministische Subjekte mit Selbstaktuation darstellen. Insbesondere können Ströme von Individuen im Sinne der Erfindung Ansammlungen von Personen sein, die sich gemeinsam in einem Gebiet bewegen. Die Positionen der Personen in dem Gebiet können dabei dynamisch sein und von der Bewegungsstrategie der jeweiligen Person abhängig sein. Ferner können die Bewegungen einer Person durch die Bewegungen und temporären Aufenthaltspositionen anderer benachbarter Personen beeinflusst werden. Im der folgenden Beschreibung wird der Einfachheit halber Bezug genommen auf Personen und Personenströme, ohne dabei die Beschreibung auf diese spezielle Art von Individuen und Individuenströmen zu beschränken.

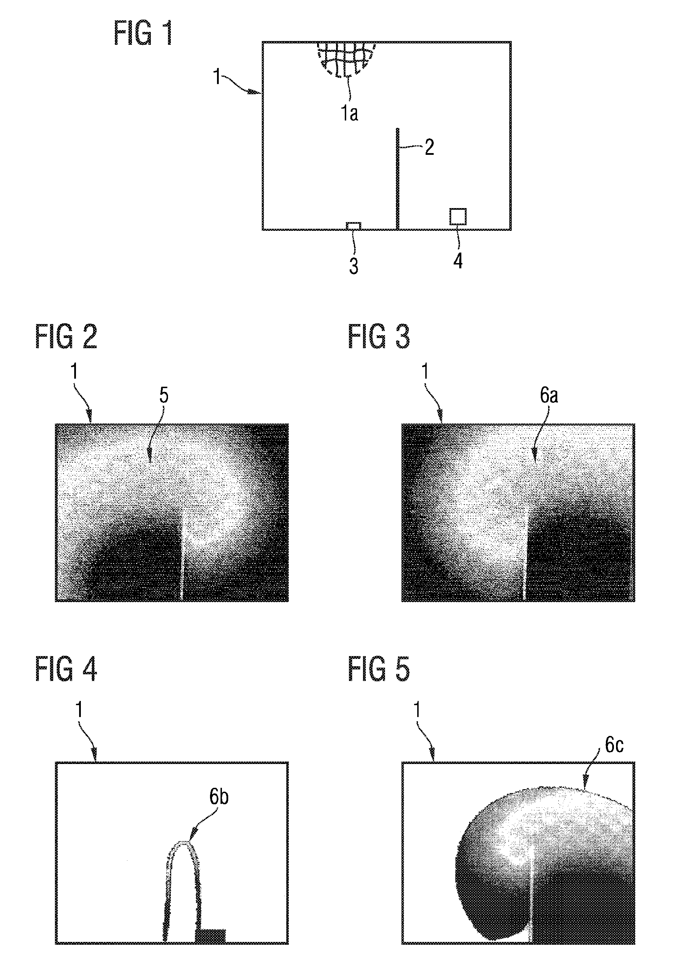

Fig. 1 zeigt eine schematische Darstellung eines Gebiets 1 mit einem Hindernis 2. Das Gebiet 1 kann beispielsweise in einem Automaten, insbesondere einem Zellulärautomaten, durch ein Gitternetz 1a modelliert werden, welches anrissweise in Fig. 1 dargestellt ist. Das Gitternetz 1a kann beispielsweise in Gitterzellen gleicher Größe unterteilt sein, und relevante geometrische Parameter wie Abstand und/oder Position können jeweils dem Zentrum der Gitterzellen zugeordnet sein. Das Gitternetz 1a kann beispielsweise quadratische oder hexagonale Gitterzellen umfassen. Es ist dabei klar, dass die genaue Ausgestaltung, Form und Granularität des Gitternetzes viele unterschiedliche Ausgestaltungen umfassen kann.

Das Gebiet 1 umfasst ein Hindernis 2, hier beispielhaft als Wand in dem Gebiet 1 dargestellt. Das Hindernis 2 trennt einen linken Bereich des Gebiets 1'' in dem sich beispielhaft eine Quelle 3 für Personen befindet, von einem rechten Bereich des Gebiets 1, in dem sich beispielhaft ein Zielobjekt 4 für Personen befindet. Es ist klar, dass weitere Hindernisse in dem Gebiet 1 befindlich sein können, und dass das Hindernis 2 und möglicherweise weitere Hindernisse beliebige Form und Gestalt aufweisen können.

Die Quelle 3 dient als Startposition für ein oder mehrere Personen, die sich in dem Gebiet 1 zu dem Zielobjekt 4 bewegen möchten. Dabei das Augenmerk der Personen auf eine möglichst schnelle Durchquerung des Gebiets 1 gerichtet, um in möglichst kurzer Reisezeit zu dem Zielobjekt 4 zu gelangen. Unter Berücksichtigung der Geometrie der Hindernisse, hier beispielhaft des Hindernisses 2 wird daher eine Wegeplanung der Personen, die aus der Quelle 3 austreten, die Reisezeit zu optimieren versuchen. Es ist selbstverständlich möglich, dass sich weitere Quellen und Zielobjekte in dem Gebiet 1 befinden können, und das jeder einzelnen Person, welche sich in dem Gebiet 1 bewegt, eine Quelle und ein Zielobjekt in beliebiger Kombination zugeordnet werden können. Die Anzahl der Personen ist dabei weder insgesamt noch bezüglich einer der Quellen bzw. Zielobjekte limitiert. Die Personen können dabei zeitversetzt aus den Quellen in das Gebiet 1 eintreten, das heißt, dass eine Person aus der Quelle in das Gebiet 1 eintreten kann, wenn sich bereits Personen in beliebigen Bereichen des Gebiets 1 aufhalten und bewegt haben.

Fig. 2 zeigt eine schematische Darstellung eines Distanzfeldes 5 auf dem Gebiet 1 aus Fig. 1 gemäß einer Ausführungsform der Erfindung. Für das Gebiet 1 und die entsprechende Hindernisgeometrie, hier beispielhaft durch das Hindernis 2 dargestellt, kann ein Distanzfeld 5 ermittelt werden, welches für jeden Punkt des Gebietes den kürzesten Abstand zu dem jeweiligen Startpunkt angibt. Im Beispiel in Fig. 2 ist das Distanzfeld 5 für die Quelle 3 gezeigt. Dabei ist in dem Distanzfeld das Hindernis 2 berücksichtigt. Der kürzeste Abstand von der Quelle 3 zu dem Zielobjekt 4 führt beispielsweise zunächst von der Quelle 3 in gerader Linie zu dem oberen Ende des Hindernisses 2, um die Ecke des Hindernisses 2 herum, und von dort in gerader Linie auf das Zielobjekt 4 zu. Damit ist der kürzeste Abstand an der Position des Zielobjektes 4 durch die Summe der geradlinigen Distanz zwischen der Position der Quelle 3 und dem oberen Ende des Hindernisses 2 und der geradlinigen Distanz zwischen dem oberen Ende des Hindernisses 2 und der Position des Zielobjektes 4 gegeben. Für jeden Punkt des Gebiets 1 kann auf eine derartige Weise ein Wert des Distanzfeldes 5 in Abhängigkeit von der Startposition definiert werden.

Das Distanzfeld 5 kann über einen Fast-Marching-Algorithmus bestimmt werden, wobei die Startpositionen, hier beispielsweise die Position der Quelle 3 in dem Gebiet 1 als Startpunkte für den Algorithmus verwendet werden. Es ist möglich, die Distanz zwischen Punkten, die über eine geradlinige Verbindung verfügen, das heißt, die nicht durch Hindernisse voneinander getrennt sind, über die Euklidische Distanz anzugeben. Selbstverständlich sind auch andere Metriken zur Bestimmung der Distanz solcher Punkte möglich.

Fig. 3 zeigt eine schematische Darstellung eines Navigationsfeldes 6a auf dem Gebiet 1 aus Fig. 1 gemäß einer weiteren Ausführungsform der Erfindung. Das Navigationsfeld 6a definiert in jedem Punkt des Gebiets 1 die kürzeste Reisezeit zwischen dem Punkt und einem Bezugsziel, hier beispielsweise dem Zielobjekt 4. Dabei berücksichtigt das Navigationsfeld 6a die Topologie der Hindernisse, hier beispielsweise des Hindernisses 2. Das Navigationsfeld 6a kann über einen Fast-Marching-Algorithmus bestimmt werden, wobei die Zielpositionen, hier beispielsweise die Position des Zielobjekts 4 in dem Gebiet 1 als Startpunkte für den Algorithmus verwendet werden. Für jeden Punkt des Gebiets 1 kann im Bezug auf einen benachbarten Punkt eine Reifezeit angegeben werden, das heißt, eine Zeit, die notwendig ist, um von dem Punkt zu dem benachbarten Punkt zu gelangen. Dabei kann die Reisezeit je nach Bereich des Gebiets und nach Bewegungsrichtung variabel sein. Das Navigationsfeld 6a ergibt sich als Lösung der Eikonaigleichung für das Gebiet 1 unter Berücksichtigung der Reisezeiten von einem Punkt zum nächsten.

Das Navigationsfeld 6a kann für jede Zielposition neu berechnet werden, und dient für eine Person, die sich in dem Gebiet befindet als Anhaltspunkt für die Wegeplanung, das heißt, für die Auswahl einer Navigationsstrategie. Sollte sich die Person alleine in dem Gebiet 1 befinden, wird sie gemäß des Navigationsfeldes den Weg mit der kürzesten Reisezeit zur Zielposition in der Wegeplanung berücksichtigen. Sollten sich jedoch eine Vielzahl von Personen in dem Gebiet 1 befinden, so kann es aufgrund der individuellen Wegeplanungen jeder einzelnen Person zu Stauungen und Ansammlungen von Personen an Punkten des Gebiets 1 kommen, die von vielen der Vielzahl der Personen in der Wegeplanung berücksichtigt worden sind. Dadurch kann es trotz optimaler individueller Wahl der Navigationsstrategie zu einer Verlängerung der Reisezeit jeder einzelnen Person aufgrund der kollidierenden Navigationsstrategien im Kollektiv kommen. Es ist daher für jede Person vorteilhaft, nach einer anfänglichen Wegeplanung und Auswahl einer Navigationsstrategie zunächst eine Änderung der Position gemäß dieser Strategie durchzuführen, und dann nach einer gewissen Zeit ein erneute Überprüfung der Wahl der Navigationsstrategie vorzunehmen, je nachdem, wie sich die Position der übrigen Personen in dem Gebiet 1 geändert hat. Diese Überprüfung kann vorteilhafterweise mit einem aktualisierten Navigationsfeld erfolgen, bei dessen Berechnung nicht nur die statische Topologie des Gebiets 1 mit den Hindernissen 2 berücksichtigt wird, sondern auch die dynamisch veränderlichen Positionen der Personen aufgrund ihrer gemäß des anfängliche Navigationsfeldes gewählten Navigationsstrategie.

Eine Idee ist es daher, zunächst ein erstes Navigationsfeld zu berechnen, die Personen für eine gewisse vorbestimmte Zeitdauer gemäß ihrer Wegeplanung zu bewegen und nach Ablauf der vorbestimmter Zeitdauer ein aktualisiertes Navigationsfeld zu bestimmen. Dies führt in einer Simulation zu einer häufigen Berechnung des Navigationsfeldes, da das Navigationsfeld häufig aktualisiert werden muss. Ein hoher Rechenaufwand bei der Aktualisierung des Navigationsfeldes sollte daher vermieden werden.

Vorteilhafterweise ist es daher wünschenswert, das Navigationsfeld 6a nur in den Bereichen des Gebietes zu berechnen bzw. zu aktualisieren, in dem sich tatsächlich Personen aufhalten, die Informationen des Navigationsfeldes in diesem Bereich zur Wahl ihrer Navigationsstrategie benötigen. In anderen Bereichen, in denen sich keine Personen aufhalten, ist eine Berechnung bzw. Aktualisierung des Navigationsfeldes nicht notwendig. Um bei der Berechnung des Navigationsfeldes ermitteln zu können, welche Bereiche bei der Berechnung zu berücksichtigen sind, ist es vorgesehen, die Berechnung in Abhängigkeit von dem oder den Distanzfeldern der Personen durchzuführen. Die Distanzfelder geben für jeden Punkt des Gebiets 1 Informationen über die Nähe von Personen, so dass das Navigationsfeld zielgerichtet ermittelt werden kann.

Fig. 4 zeigt eine schematische Darstellung eines gerichteten Navigationsfeldes auf dem Gebiet 1 aus Fig. 1 gemäß einer weiteren Ausführungsform der Erfindung. Das gerichtete Navigationsfeld 6b ist ein Teil des Navigationsfeldes 6a und nur in den Bereichen des Gebiets 1 definiert, in denen sich tatsächlich Personen aufhalten bzw. in denen Personen bezüglich ihrer Wahl der Navigationsstrategie Informationen aus dem Navigationsfeld 6b benötigen. Das Navigationsfeld 6b ist dabei unter starker Berücksichtigung des Distanzfeldes 5 in Fig. 2 ermittelt worden.

Fig. 5 zeigt eine schematische Darstellung eines gerichteten Navigationsfeldes 6c auf dem Gebiet aus Fig. 1 gemäß einer weiteren Ausführungsform der Erfindung. Das Navigationsfeld 6c ist ebenfalls Teil des Navigationsfeldes 6a. Der Unterschied zwischen dem Navigationsfeld 6c und dem Navigationsfeld 6b aus Fig. 4 besteht darin, dass das Navigationsfeld 6c unter schwächerer Berücksichtigung des Distanzfeldes 5 in Fig. 2 ermittelt worden ist als das Navigationsfeld 6b. Damit kann über eine unterschiedlich starke Berücksichtigung des Distanzfeldes 5 eine Gruppe von Punkten auf dem Gebiet 1 gebildet werden, in der eine Berechnung bzw. Aktualisierung des Navigationsfeldes 6a erfolgt.

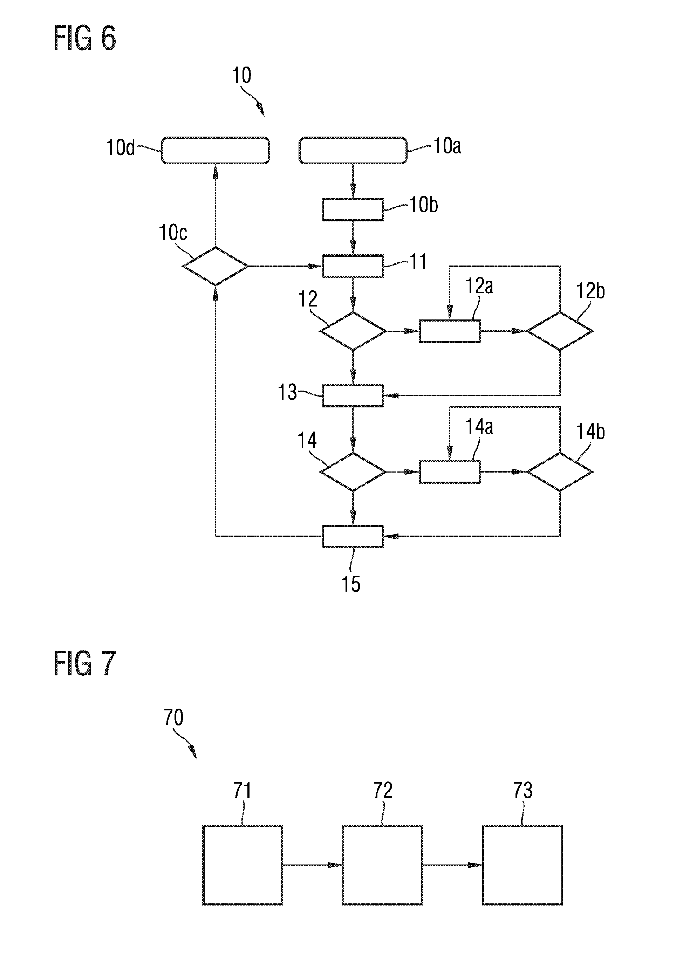

Im Folgenden wird ein Verfahren zum Erstellen eines Navigationsfeldes im Bezug auf Fig. 7 erläutert. Dabei wird beispielhaft ein zweidimensionales Gebiet mit Positionskoordinaten (x,y) zur Illustration des Verfahrens dargestellt. Fig. 7 zeigt eine schematische Darstellung eines Verfahrens 70 zum Erstellen eines Navigationsfeldes 6a bzw. 6b oder 6c gemäß einer weiteren Ausführungsform der Erfindung.

in einem ersten Schritt 71 erfolgt ein Bereitstellen einer Startposition und einer Zielposition einer Person in einem Gebiet 1. Die Startposition kann dabei beispielsweise eine Quelle 3 und die Zielposition kann beispielsweise ein Zielobjekt 4 wie in Fig. 1 dargestellt sein.

In einem zweiten Schritt 72 erfolgt ein Berechnen eines Distanzfeldes der Person für das Gebiet. Dabei kann jeweils ein Distanzfeld $D(x,y)$ für jede einer Vielzahl von Personen ermittelt werden. Das Distanzfeld $D(x,y)$, wie beispielsweise das Distanzfeld 5 in Fig. 2 gibt für jeden Punkt des Gebiets 1 die kürzeste Distanz zwischen der Startposition und dem Punkt an.

In einem dritten Schritt 73 erfolgt ein Berechnen eines Navigationsfeldes $N(x,y)$ für eine Gruppe von Punkten des Gebiets 1, wobei das Navigationsfeld $N(x,y)$ die kleinste Reisezeit $T(x,v)$ von jedem Punkt der Gruppe von Punkten zu der Zielposition angibt. Das Navigationsfeld $N(x,y)$ kann beispielweise mit Hilfe eines Fast-Marching-Algorithmus ermittelt werden.

Der Fast-Marching-Algorithmus beruht auf der Auswahl eins Punktes in der Nachbarschaft eines Saatpunktes, die eine jeweilige Kosten- bzw. Reisezeitfunktion lokal minimiert. Der ausgewählte Punkt wird zur Menge der Saatpunkte hinzugefügt und die Auswahl ausgehend dem vorher ausgewählten Punkt erneut auf der Basis seiner benachbarten Punkte durchgeführt. auf diese Weise kann über einen effizienten Sortiermechanismus eine Front von Saatpunkten in einem Binärbaum abgerastert werden.

Die Auswahl der benachbarten Punkten erfolgt dabei gemäß eines Kostenparameters $k(x, y)$. Der Kostenparameter in herkömmlichen Automaten mit. Fast-Marching-Algorithmen ist üblicherweise die Reisezeit $T(x,y)$ für die jeweiligen benachbarten Punkte. In jedem Schritt des Algorithmus werden danach die Punkte mit der kleinsten Reisezeit $T(x,y)=k(x,y)$ aussortiert und aus dem Binärbaum entfernt. Die neuen Nachbarn der aussortierten Punkte werden initialisiert und ihrer Reisezeit $T(x,y)$ nach im Binärbaum klassifiziert. Auf diese Weise kann eine gerichtete Tiefensuche erfolgen.

Mit dem herkömmlichen Algorithmus erfolgt eine Rasterung des gesamten Gebiets, wenn die Berechnung nicht vorzeitig unterbrochen wird. Die Berechnung kann beispielsweise dann unterbrochen werden, wenn alle Punkte, an denen sich Startpositionen von Personen befinden, durch das teilweise berechnete Navigationsfeld abgedeckt sind. Damit wird der zeitliche Aufwand der Navigationsfeldberechnung erheblich reduziert.

Dadurch, dass der herkömmliche Algorithmus allerdings keine Informationen über die Positionen von Personen berücksichtigt, kann nicht vorausgesagt werden, wann die Berechnung des Navigationsfeldes unterbrochen werden kann. Im schlechtesten Fall muss die Berechnung des Navigationsfeldes komplett erfolgen, da zufälligerweise erst im letzten Schritt die Startposition einer Person im Navigationsfeld erfasst wird. Es ist daher eine wesentliche Idee, die Berechnung des Navigationsfelds von der Position der in dem Gebiet befindlichen Personen abhängig zu machen, um eine gerichtete Navigationsfeldberechnung bereitzustellen und somit die Bereiche, in denen sich tatsächlich Personen befinden, bevorzugt zu berechnen.

Erfindungsgemäß wird hierzu eine Sortierung der ausgewählten Punkte im Fast-Marching-Algorithmus nicht nur über die kleinste Reisezeit bestimmt, sondern auch mit der Nähe zu Personen gewichtet. Als Kostenparameter k(x, y) kann daher eine Gewichtung der Reisezeit T(x,y) und des Distanzfeldes D(x,y) einer Person verwendet werden:

$$k(x,y) = \alpha * T(x,y) + (1-\alpha) * \beta * D(x,y),$$

wobei $\alpha$ und $\beta$ frei zu wählende Gewichtungsparameter sind. Die Navigationsfelder 6b und 6c in den Figuren 4 und 5 sind jeweils mit einem Gewichtungsparameter von $\alpha$=0,4 bzw. $\alpha$=0,7 berechnet worden. Je geringer also der Gewichtungsparameter $\alpha$ ist, desto stärker wird die Distanz der auszusortierenden Punkte im Fast-Marching-Algorithmus gewichtet, und desto gerichteter ist das resultierende Navigationsfeld N(x,y). Auf diese Weise können Navigationsfelder gezielt auf relevante Bereiche bzw. Gruppen von Punkten in einem Gebiet eingeschränkt werden, und der Rechenaufwand verringert sich erheblich.

Fig. 6 zeigt eine schematische Darstellung eines Verfahrens 10 zur Wegeplanung eines Individums in einem Automaten, insbesondere einem Zelluläautomaten, zur Personenstromsimulation gemäß einer weiteren Ausführungsform der Erfindung. In einem ersten Schritt 10a erfolgt eine Initialisierung des Automaten. In einem zweiten Schritt 10b kann die Steuerung initialisiert werden. Dabei werden Distanzfelder D(x,y) für alle Punkte eines Gebiets für alle Startpositionen S von Personen berechnet. Zugleich werden anfängliche Navigationsfelder N(x,y) für alle Punkte des Gebiets für alle Zielpositionen berechnet.

In einem Schritt 11 beginnt das eigentliche Simulationsverfahren für Personen, die sich an den Startpositionen S in dem Gebiet befinden. Ein erster Simulationsschritt der Länge dt kann intiiert werde. In einem Schritt 12 wird überprüft, ob bereits eine vorbestimmte Zeitdauer der Simulation abgelaufen ist. Sollte dies nicht der Fall sein, werden in einem Schritt 13 alle Personen bewegt, das heißt, ihre Positionen werden anhand ihrer individuell gewählten Navigationsstrategie in Abhängigkeit von Zielposition und Navigationsfeld N(x,y) verändert.

Sollte allerdings in Schritt 12 festgestellt werden, das eine vorbestimmte Zeitdauer der Simulation bereits abgelaufen ist, kann eine Aktualisierung der Navigationsfelder N(x,y) werden. Hierzu werden in einem Schritt 12a aktualisierte Navigationsfelder N(x,y) berechnet, beispielsweise mit einem Verfahren gemäß Fig. 7. Bei der Aktualisierung der Navigationsfelder N(x,y) können insbesondere das Distanzfeld D(x,y) sowie die veränderten Positionen der Personen in dem Gebiet berücksichtigt werden. Beispielsweise kann eine Personenansammlung in einem Bereich des Gebiets als Stau erkannt werden, und die Reisezeiten T(x,y) in dem betreffenden Bereich verlängert werden. Dadurch kann das Navigationsfeld N(x,y) dynamisch an veränderte Personenstromsituationen angepasst werden.

Bei der Aktualisierung des Navigationsfelds N(x,y) wird periodisch in Schritt 12b ein Abbruchkriterium überprüft. Beispielsweise kann die Navigationsfeldberechnung abgebrochen werden, wenn alle Positionen von Personen jeweils über ein zugeordnetes Navigationsfeld N(x,y) an dieser Position verfügen. Es kann hierzu vorgesehen sein, einen oder mehrere Zähler für die Vielzahl von Personen zu erzeugen, und die Zähler zu inkrementieren, sobald ein Punkt bei der Berechnung des aktualisierten Navigationsfeldes aussortiert worden ist, auf dem sich eine Person befindet. Bei Erreichen eines vorher definierten Zählerstandes kann dann ein Abbruchkriterium erfüllt sein. Es kann alternativ auch vorgesehen sein, das Navigationsfeld N(x,y) in einem gewissen Bereich um die Personen herum zu aktualisieren, um Personen auch bei einer geringfügigen Abweichung vom kürzesten Weg ein Navigationsfeld anbieten zu können. Je nach Wahl der Gewichtungsparameter für die Einbeziehung des Distanzfeldes D(x,y) können damit Randbereiche des Navigationsfeldes N(x,y) um die Personen bzw. ihre kürzesten Wege zur Zielposition bereitgestellt werden. Dazu kann es vorgesehen sein, die Berechnung des Navigationsfeldes N(x,y) auch nach Erreichen eines Abbruchkriteriums noch für eine vorbestimmte Anzahl von Schritten weiterlaufen zu lassen. Weiterhin kann es möglich sein, den Abbruch von dem Kostenparameter k(x,y) abhängig zu machen, beispielsweise über eine vorgegebene Abweichung des Kostenparameters k(x,y) von einem bei Erreichen eines minimalen Abbruchkriteriums vorliegenden Referenzkostenparameter k(x,y). Es ist klar, dass viele verschiedene Strategien für den Abbruch der Berechnung des Navigationsfeldes N(x,y) gleichermaßen und angepasst an die Herangezogen werden können. Nach einer Aktualisierung des Navigationsfeldes N(x,y) kehrt das Verfahren zu Schritt 13 zurück, in dem die Personen eine entsprechende neue Wegeplanung über die Wahl einer geänderten Navigationsstrategie ermitteln können und ihre Positionen demgemäß verändern können.

In einem Schritt 14 wird überprüft, ob gegebenenfalls eine Person an einer Position befindlich ist, in der kein zugeordnetes Navigationsfeld N(x,y) existiert. Dies kann daher rühren, dass das berechnete Navigationsfeld durch einen Abbruch der Berechnung in diesem Bereich nicht aktualisiert worden ist. In diesem Fall kann es vorgesehen sein, dass in einem Schritt 14a ein Navigationsfeld in dem Bereich der jeweiligen Person nachberechnet wird. Hierzu kann die Berechnung des Navigationsfeldes N(x,y) an der Stelle, an der in Schritt 12b ein Abbruch der Berechnung herbeigeführt worden ist, wieder aufgenommen werden. Es kann auch vorgesehen sein, für die noch nicht initialisierte Position einen Navigationsfeldwert aus den bereits berechneten Nachbarwerten zu berechnen bzw. zu extrapolieren. Damit kann eine erneute Durchführung eines Navigationsfeldberechnung unter Zeit- und Rechenersparnis vermieden werden. In einem Schritt 14b wird wiederum überprüft, ob die Nachberechnung des Navigationsfeldes ausreichend ist, um der Person eine neue Wahl einer Navigationsstrategie mit dem erweiterten Navigationsfeld nun zu ermöglichen.

In einem Schritt 15 kann die Ankopplung des Verfahrens an ein graphenbasiertes Modell erfolgen. Kommt eine Person durch die Veränderung ihrer Position an einem Knotenpunkt eines Graphen an, so bestimmt sie die Reisezeiten entlang der Kanten des Graphen, die sie über die jeweiligen Kanten zu ihrer Zielposition benötigt. Bei einem deterministischen Verfahren kann die Person dann die Kante mit der kürzesten Reisezeit wählen. Die gewählte Kante kann dann wiederum einem neuen Gebiet mit neuen Hindernissen in einem anderen Automaten zugeordnet sein, in dem wiederum das Verfahren 10 ablaufen kann. Auf diese Weise können Personen mithilfe des Verfahrens 10 durch eine Kante eines Navigationsgraphen geleitet werden, und die Auswahl der Kanten erfolgt dann über ein globales Reisezeitmodell.

Befinden sich viele Personen auf einer Kante bzw. in einem einer Kante eines Navigationsgraphen zugeordneten Gebiet, so ist davon auszugehen, dass Personenansammlungen bzw. Stauungen auftreten können. In diesem Fall kann ein Verfahren wie beispielsweise das Verfahren 10 zur Wegeplanung der Personen eingesetzt werden. Auf der jeweiligen Kante können die Knotenpunkte, die durch die Kante verbunden werden, als Start-und Zielpositionen definiert werden, und Navigation- bzw. Distanzfelder entlang des Gebiets der Kante berechnet werden.

Befinden sich hingegen wenige Personen auf einer Kante, so ist die Bildung von Stauungen eher unwahrscheinlich, und es kann von einer der Länge der Kante entsprechenden Reisezeit ausgegangen werden. Die Personen, die sich entlang dieser Kante bewegen, können dann ihre Wegeplanung anhand der einheitlichen der Kante zugeordneten Reisezeit ausrichten, ohne dass ein Verfahren nach Fig. 6 initiiert werden müsse.

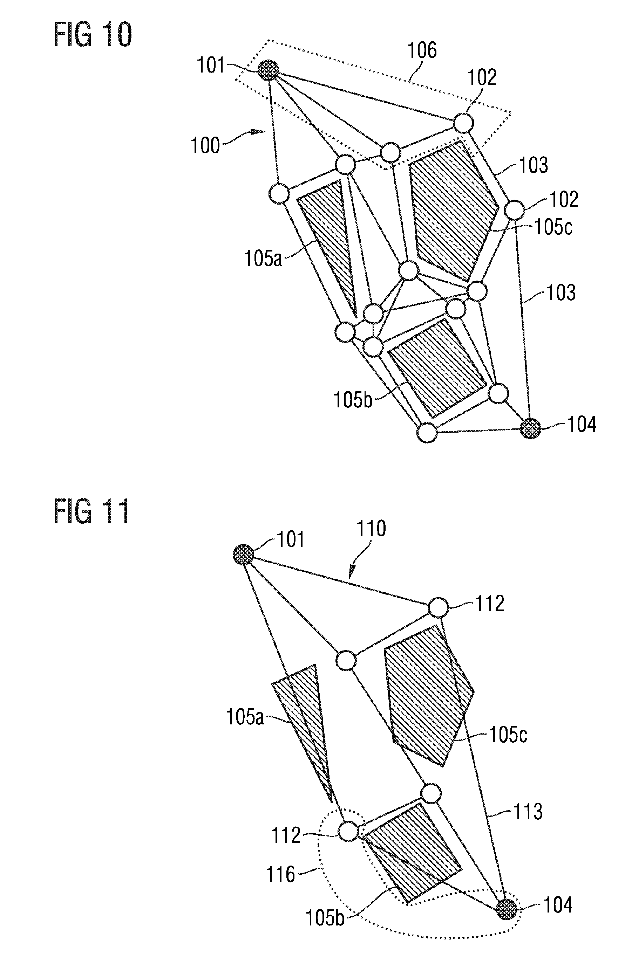

Fig. 10 zeigt eine schematische Darstellung eines Gebiets mit einer Vielzahl von Hindernissen 105a, 105b, 105c und einem Sichtbarkeitsgraphen 100 mit einem Startpunkt 101 und einem Zielpunkt 104. Der Sichtbarkeitsgraph 100 ist ein Graph aus Knotenpunkten 102 und die Knotenpunkte verbindenden Kanten 103. Dabei führen die Kanten 103 jeweils geradlinig an den Hindernissen 105a, 105b, 105c vorbei, so dass eine direkte Sichtverbindung zwischen benachbarten Knotenpunkten 102 besteht. Durch das Sichtbarkeitskriterium wird gewährleistet, dass die Reisezeit entlang einer Kante 103 mit der Länge der Kante 103 korreliert. Der Sichtbarkeitsgraph 100 ist zwar für die Abbildung statischer Hindernisse 105a, 105, 105c geeignet, jedoch ungeeignet für die Abbildung dynamischer Hindernisse wie beispielsweise Stauungen oder Ansammlungen von Personen entlang der Kanten 103. Es müssten zur realen Abbildung von Manuell weitere Knotenpunkte 102 und Kanten 103 eingefügt werden, die diese dynamischen Hindernisse berücksichtigen. Die Anzahl der notwendigen Knotenpunkte 102 und Kanten 103 ist daher relativ hoch.

Bei einer herkömmlichen Navigationsfeldberechnung für die Kanten 103 muss zudem für jede Kante 103 ein Polygon 106 zugeordnet werden, innerhalb dessen für jeden Kantenbereich ein Navigationsfeld berechnet wird. Die Anzahl der notwendigen Polygone 106 und der zugehörigen Navigationsfelder machen die Simulation bei einer komplexen Topologie des Gebietes dementsprechend komplex und rechenaufwändig.

Fig. 11 zeigt eine schematische Darstellung des Gebiets mit der Vielzahl von Hindernissen 105a, 105b, 10c und einem Navigationsgraphen 110 gemäß einer weiteren Ausführungsform der Erfindung. Durch eine Kombination der erfindungsgemäßen Navigationsfeldberechnung, wie beispielsweise im Zusammenhang mit den Fig. 6 und 7 erläutert, kann die Komplexität der Simulation erheblich reduziert werden. Dadurch, dass Navigationsfelder gerichtet berechnet werden können, können Hindernisse wie beispielsweise das Hindernis 105b, durch entsprechende dynamische Wahl des Navigationsfeldes 116 umgangen werden. Das Navigationsfeld 116 kann dabei sowohl statische Hindernisse wie das Hindernis 105b als auch dynamische Hindernisse wie Ansammlungen von Personen berücksichtigen. Dadurch ist die Verwendung eines Sichtbarkeitsgraphen 100 wie in Fig. 10 nicht mehr notwendig, und es können einfachere Graphen wie der Navigationsgraph 110 verwendet werden. Der Navigationsgraph 110 weist eine geringere Anzahl von Knotenpunkten 112 und Kanten 113 auf, die auch durch Hindernisse 105a, 105b, 105c geradlinig hindurch führen können.

Mit dem vorliegenden Verfahren können robuste Graphenmodelle mit eingesetzt werden, die einen geringen Implementierungsaufwand erfordern und zuverlässige Wegeplanungen von Personen ermöglichen. Durch die weitreichende Betrachtung anderer Personen in einem Gebiet und deren Einbeziehung in die Wahl der Navigationsstrategie können Kollektivphänomene, wie beispielsweise die Verteilung eines Personenstroms beim Fluss um eine Ecke eines Hindernisses realistischer modelliert werden, als es bei herkömmlichen Automaten der Fall ist.

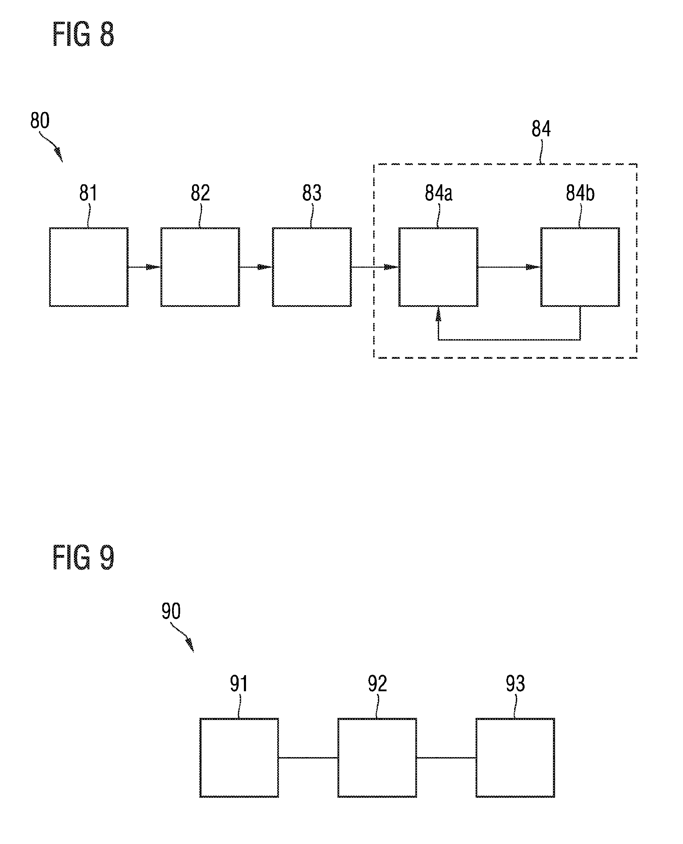

Fig. 8 zeigt eine schematische Darstellung eines Verfahrens 80 zur Wegeplanung von Individuen in einem Automaten zur Personenstromsimulation gemäß einer weiteren Ausführungsform der Erfindung. In einem ersten Schritt 81 erfolgt ein Bereitstellen einer Vielzahl von Startpositionen und einer Vielzahl von Zielpositionen einer Vielzahl von Individuen in einem Gebiet. In einem zweiten Schritt 82 erfolgt ein Berechnen eines Distanzfeldes für jedes der Vielzahl von Individuen für das Gebiet, wobei das Distanzfeld jeweils für jeden Punkt des Gebiets die kürzeste Distanz zwischen der Startposition des jeweiligen Individuums und dem Punkt angibt. In einem dritten Schritt erfolgt ein Berechnen eines Navigationsfeldes für jedes der Vielzahl von Individuen für jeweils eine Gruppe von Punkten des Gebiets, wobei das Navigationsfeld jeweils die kleinste Reisezeit von jedem Punkt der jeweiligen Gruppe von Punkten zu der jeweiligen Zielposition des Individuums angibt, und wobei die jeweilige Gruppe von Punkten aus allen Punkten des Gebiets in Abhängigkeit von Werten des jeweiligen Distanzfelds für das Individuum ausgewählt wird. In einem vierten Schritt 84 erfolgt, zunächst der Teilschritt 84a des Änderns der Position jedes der Vielzahl von Individuen gemäß des ermittelten Navigationsfelds. In periodischen Zeitabständen kann dann in einem Teilschritt 84b ein Berechnen eines aktualisierten Navigationsfeldes für jedes der Vielzahl von Individuen für jeweils eine Gruppe von Punkten des Gebiets erfolgen, wobei die geänderten Positionen der Vielzahl von Individuen bei der Angabe der kleinsten Reisezeiten des Navigationsfeldes berücksichtigt werden.

Fig. 9 zeigt eine schematische Darstellung einer Vorrichtung 90 zur Wegeplanung von Individuen in einem Automaten zur Personenstroffisimulation gemäß einer weiteren Ausführungsform der Erfindung. Die Vorrichtung 90 umfasst eine Bereitstellungseinrichtung 91, welche dazu ausgelegt ist, eine Vielzahl von Startpositionen und eine Vielzahl von Zielpositionen einer Vielzahl von Individuen in einem Gebiet bereitzustellen, eine Berechnungseinrichtung 92, welche dazu ausgelegt ist, ein Distanzfeld für jedes der Vielzahl von Individuen für das Gebiet zu berechnen, wobei das Distanzfeld jeweils für jeden Punkt des Gebiets die kürzeste Distanz zwischen der Startposition des jeweiligen Individuums und dem Punkt angibt, und welche dazu ausgelegt ist, ein Navigationsfeld für jedes der Vielzahl von Individuen für jeweils eine Gruppe von Punkten des Gebiets zu berechnen, wobei das Navigationsfeld jeweils die kleinste Reisezeit von jedem Punkt der jeweiligen Gruppe von Punkten zu der jeweiligen Zielposition des Individuums angibt, und wobei die jeweilige Gruppe von Punkten aus allen Punkten des Gebiets in Abhängigkeit von Werten des jeweilige Distanzfelds für das Individuum ausgewählt wird, und eine Simulationseinrichtung 93, welche dazu ausgelegt ist, die Position jedes der Vielzahl von Individuen gemäß des ermittelten Navigationsfelds zu ändern.

Die Berechnungseinrichtung 92 ist weiterhin dazu ausgelegt, das Navigationsfeld für jedes der Vielzahl von Individuen für jeweils eine Gruppe von Punkten des Gebiets zu aktualisieren, wobei die geänderten Positionen der Vielzahl von Individuen bei der Angabe der kleinsten Reisezeiten des Navigationsfeldes berücksichtigt werden.

**Patentansprüche**

1. Verfahren (70) zum Erstellen von Navigationsfeldern (N) für eine dynamische Wegeplanung eines Individuums, mit den Schritten:

   Bereitstellen (71) einer Startposition (3) und einer Zielposition (4) eines Individuums in einem Gebiet (1);
   Berechnen (72) eines Distanzfeldes (D) des Individuums für das Gebiet (1), wobei das Distanzfeld (D) für jeden Punkt des Gebiets (1) die kürzeste Distanz zwischen der Startposition (3) und dem Punkt angibt; und
   Berechnen (73) eines Navigationsfeldes (N) für eine Gruppe von Punkten des Gebiets, wobei das Navigationsfeld (N) die kleinste Reisezeit (T) von jedem Punkt der Gruppe von Punkten zu der Zielposition (4) angibt, und wobei die Gruppe von Punkten aus allen Punkten des Gebiets (1) in Abhängigkeit von Werten des Distanzfelds (D) ausgewählt wird.

2. Verfahren (70) nach Anspruch 1, wobei das Gebiet (1) eine Vielzahl von Hindernissen (2) umfasst, und wobei die kürzesten Distanzen des Distanzfeldes (D) unter Berücksichtigung der Vielzahl von Hindernisse (2) bestimmt werden.

3. Verfahren (70) nach einem der Ansprüche 1 oder 2, wobei das Gebiet (1) ein zweidimensionales Gebiet ist, und wobei die kürzesten Distanzen in einer euklidischen Metrik bestimmt werden.

4. Verfahren (70) nach einem der Ansprüche 1 bis 3, wobei das Gebiet (1) ein Gitternetz (1a) mit Gitterzellen umfasst, und wobei das Berechnen des Navigationsfeldes (N) mithilfe eines Fast-Marching-Algorithmus erfolgt.

5. Verfahren (70) mach Anspruch 3, wobei die Sortierung des Fast-Marching-Algorithmus für die Gruppe von Punkten gemäß einer Gewichtung der kleinsten Reisezeit (T) und des Wertes des Distanzfeldes (D) für jeden der Punkte erfolgt.

6. Verfahren (80) zur Wegeplanung von Individuen in einem Automaten zur Individuenstromsimulation, mit den Schritten:

   Bereitstellen (81) einer Vielzahl von Startpositionen (3) und einer Vielzahl von Zielpositionen (4) einer Vielzahl von Individuen in einem Gebiet (1);
   Berechnen (82) eines Distanzfeldes (D) für jedes der Vielzahl von Individuen für das Gebiet (1), wobei das Distanzfeld (D) jeweils für jeden Punkt des Gebiets (1) die kürzeste Distanz zwischen der Startposition (3) des jeweiligen Individuums und dem Punkt angibt;

Berechnen (83) eines Navigationsfeldes (N) für jedes der Vielzahl von Individuen für jeweils eine Gruppe von Punkten des Gebiets (1), wobei das Navigationsfeld (N) jeweils die kleinste Reisezeit (T) von jedem Punkt der jeweiligen Gruppe von Punkten zu der jeweiligen Zielposition (4) des Individuums angibt, und wobei die jeweilige Gruppe von Punkten aus allen Punkten des Gebiets (1) in Abhängigkeit von Werten des jeweiligen Distanzfelds (D) für das Individuum ausgewählt wird;

Ändern (84a) der Position jedes der Vielzahl von Individuen gemäß des ermittelten Navigationsfelds (N); und

Berechnen (84b) eines aktualisierten Navigationsfeldes (N) für jedes der Vielzahl von Individuen für jeweils eine Gruppe von Punkten des Gebiets (1), wobei die geänderten Positionen der Vielzahl von Individuen bei der Angabe der kleinsten Reisezeiten (T) des Navigationsfeldes (N) berücksichtigt werden.

7. Verfahren (80) nach Anspruch 6, wobei das Gebiet (1) eine Vielzahl von Hindernissen (2) umfasst, und wobei die kürzesten Distanzen des Distanzfeldes (D) unter Berücksichtigung der Vielzahl von Hindernissen (2) bestimmt werden.

8. Verfahren (80) nach einem der Ansprüche 6 oder 7, wobei das Gebiet (1) ein zweidimensionales Gebiet ist, und wobei die kürzesten Distanzen in einer euklidischen Metrik bestimmt werden.

9. Verfahren (80) nach einem der Ansprüche 6 bis 8, wobei das Gebiet (1) ein Gitternetz (1a) mit Gitterzellen umfasst, und wobei das Berechnen des Navigationsfeldes (N) mithilfe eines Fast-Marching-Algorithmus erfolgt.

10. Verfahren (80) mach Anspruch 9, wobei die Sortierung des Fast-Marching-Algorithmus für die jeweilige Gruppe von Punkten gemäß einer Gewichtung der kleinsten Reisezeit (T) und des Wertes des Distanzfeldes (D) für jeden der Punkte erfolgt.

11. Verfahren (80) nach einem der Ansprüche 9 oder 10, weiterhin mit dem Schritt:

Berechnen eines erweiterten Navigationsfelds (N) für ein Individuum, falls bei dem Schritt des Änderns (84a) der Position des Individuum ein Punkt des Gebiets (1) erreicht wird, der nicht in der jeweiligen Gruppe von Punkten des jeweiligen Navigationsfelds (N) liegt.

12. Verfahren (80) nach Anspruch 11, wobei das Berechnen des erweiterten Navigationsfelds (N) ein Berechnen eines extrapolierten Wertes für die kleinste Reisezeit (T) aus Werten des Navigationsfelds (N) benachbarter Punkte aus der jeweiligen Gruppe von Punkten umfasst.

13. Vorrichtung (90) zur Wegeplanung von Individuen in einem Automaten zur Personenstromsimulation, mit:

einer Bereitstellungseinrichtung (91), welche dazu ausgelegt ist, eine Vielzahl von Startpositionen und eine Vielzahl von Zielpositionen einer Vielzahl von Individuen in einem Gebiet bereitzustellen;

einer Berechnungseinrichtung (92) , welche dazu ausgelegt ist, ein Distanzfeld für jedes der Vielzahl von Individuen für das Gebiet zu berechnen, wobei das Distanzfeld jeweils für jeden Punkt des Gebiets die kürzeste Distanz zwischen der Startposition des jeweiligen Individuums und

dem Punkt angibt, und welche dazu ausgelegt ist, ein Navigationsfeld für jedes der Vielzahl von Individuen für jeweils eine Gruppe von Punkten des Gebiets zu berechnen,

wobei das Navigationsfeld jeweils die kleinste Reisezeit von jedem Punkt der jeweiligen Gruppe von Punkten zu der jeweiligen Zielposition des Individuums angibt, und wobei die jeweiligen Gruppe von Punkten aus allen Punkten des Gebiets in Abhängigkeit von Werten des jeweiligen Distanzfelds für das Individuum ausgewählt wird; und

einer Simulationseinrichtung (93), welche dazu ausgelegt ist, die Position jedes der Vielzahl von Individuen gemäß des ermittelten Navigationsfelds zu ändern,

wobei die Berechnungseinrichtung (92) weiterhin dazu ausgelegt ist, das Navigationsfeld für jedes der Vielzahl von Individuen für jeweils eine Gruppe von Punkten des Gebiets zu aktualisieren, wobei die geänderten Positionen der Vielzahl von Individuen bei der Angabe der kleinsten Reisezeiten des Navigationsfeldes berücksichtigt werden.

14. Vorrichtung (90) nach Anspruch 13, wobei das Gebiet eine Vielzahl von Hindernissen umfasst, und wobei die Berechnungseinrichtung (92) dazu ausgelegt ist, die kürzesten Distanzen des Distanzfeldes unter Berücksichtigung der Vielzahl von Hindernissen zu bestimmen.

**15.** Vorrichtung (90) nach einem der Ansprüche 13 oder 14, wobei das Gebiet ein zweidimensionales Gebiet ist, und wobei die Berechnungseinrichtung (92) dazu ausgelegt ist, die kürzesten Distanzen in einer euklidischen Metrik zu bestimmen.

**16.** Vorrichtung (90) nach einem der Ansprüche 13 bis 15, wobei das Gebiet ein Gitternetz mit Gitterzellen umfasst, und wobei die Berechnungseinrichtung (92) dazu ausgelegt ist, das Navigationsfeld mithilfe eines Fast-Marching-Algorithmus zu berechnen.

**17.** Vorrichtung (90) nach Anspruch 16, wobei die Sortierung des Fast-Marching-Algorithmus für die jeweilige Gruppe von Punkten gemäß einer Gewichtung der kleinsten Reisezeit und des Wertes des Distanzfelds für jeden der Punkte erfolgt.

**18.** Vorrichtung (90) nach einem der Ansprüche 16 oder 17, wobei die Berechnungseinrichtung (92) ferner dazu ausgelegt ist, ein erweitertes Navigationsfeld für ein Individuum zu berechnen, falls die Simulationseinrichtung (93) beim Änderns der Position des Individuums einen Punkt des Gebiets erreicht, der nicht in der jeweiligen Gruppe von Punkten des jeweiligen Navigationsfelds legt.

**19.** Vorrichtung (90) nach Anspruch 18, wobei die Berechnungseinrichtung (92) ferner dazu ausgelegt ist, das erweiterte Navigationsfeld auf der Basis von extrapolierten Werten für die kleinste Reisezeit aus Werten des Navigationsfelds benachbarter Punkte aus der jeweiligen Gruppe von Punkten zu berechnen.

FIG 1

FIG 2

FIG 3

FIG 4

FIG 5

FIG 6

FIG 7

FIG 8

FIG 9

FIG 10

FIG 11

**EP 2 466 531 A1**

Europäisches Patentamt
European Patent Office
Office européen des brevets

# EUROPÄISCHER RECHERCHENBERICHT

Nummer der Anmeldung

EP 10 19 5437

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | I. M. MITCHELL, S. SASTRY: "Continuous path planning with multiple constraints", PROCEEDINGS OF THE 42ND IEEE CONFERENCE ON DECISION AND CONTROL (CDC'03), Bd. 5, 9. Dezember 2003 (2003-12-09), Seiten 5502-5507, XP010686430, * das ganze Dokument * ----- | 1-19 | INV. G06N3/00 |
| X | A. KNEIDL, A. BORRMANN, D. HARTMANN: "Einsatz von graphbasierten Ansaetzen in einer mikroskopischen Personenstromsimulation fuer die Wegewahl der Fussgaenger", TAGUNGSBAND DES 22. FORUM BAUINFORMATIK, 29. September 2010 (2010-09-29), XP002635309, * das ganze Dokument * ----- | 1-19 | |
| A | D. HARTMANN: "Adaptive pedestrian dynamics based on geodesics", NEW JOURNAL OF PHYSICS, Bd. 12, Nr. 4, 43032, 14. April 2010 (2010-04-14), XP020176119, * das ganze Dokument * ----- | 1-19 | RECHERCHIERTE SACHGEBIETE (IPC) G06N G06F |
| A | T. KRETZ: "Pedestrian traffic: on the quickest path", JOURNAL OF STATISTICAL MECHANICS: THEORY AND EXPERIMENT, Bd. 2009, Nr. 3, P03012, 6. März 2009 (2009-03-06), XP020155549, * das ganze Dokument * ----- -/-- | 1-19 | |

Der vorliegende Recherchenbericht wurde für alle Patentansprüche erstellt

| Recherchenort | Abschlußdatum der Recherche | Prüfer |
|---|---|---|
| Den Haag | 1. Juni 2011 | Douarche, Nicolas |

EPO FORM 1503 03.82 (P04C03)

| Europäisches Patentamt European Patent Office Office européen des brevets | **EUROPÄISCHER RECHERCHENBERICHT** | **Nummer der Anmeldung** EP 10 19 5437 |
| --- | --- | --- |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
| --- | --- | --- | --- |
| A | J. MEHLICH: "Laufzeitoptimierung von Simulationen raumkontinuierlicher Modelle der Fussgaengerdynamik mithilfe von Nachbarschaftslisten", BERICHTE DES FORSCHUNGSZENTRUMS JUELICH, Nr. 4308, September 2009 (2009-09), XP002639826, ISSN: 0944-2952 * das ganze Dokument * ----- | 1-19 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
| --- | --- | --- |
| Den Haag | 1. Juni 2011 | Douarche, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................

& : Mitglied der gleichen Patentfamilie, übereinstimmendes Dokument

EPO FORM 1503 03.82 (P04C03)